# EUROPEAN PATENT APPLICATION

(11) **EP 2 574 480 A2**
(43) Date of publication of application: **03.04.2013**
(21) Application number: 12159329.7
(22) Date of filing: 13.03.2012
(51) Int. Cl.: B60C 23/04

(54) **Tire pressure monitoring system module**

(30) Priority: 28.09.2011 KR 20110098385
(71) Applicant: Samsung Electro-Mechanics Co., Ltd, Suwon Gyunggi-do 443-743 (KR)
(72) Inventor: Han, Jong Woo, 443-743 Gyunggi-do (KR); Na, Jong In, 443-743 Gyunggi-do (KR); Lee, Hee Bum, 443-743 Gyunggi-do (KR); Song, Jong Hyeong, 443-743 Gyunggi-do (KR)
(74) Representative: Heine, Christian Klaus

(57) **Abstract**

Disclosed herein is a tire pressure monitoring system module including: a circuit board having electronic components and electrical elements mounted thereon to transceive electrical signals; a battery mounted on a lower portion of the circuit board to thereby form a double layer structure together with the circuit board; a valve antenna provided at a side portion of the circuit board; and a connection pin connecting the circuit board and the valve antenna to each other.

## Description

### CROSS REFERENCE TO RELATED APPLICATION

This application claims the benefit of Korean Patent Application No. 10-2011-0098385, filed on September 28, 2011, entitled "Tire Pressure Monitoring System Module", which is hereby incorporated by reference in its entirety into this application.

### BACKGROUND OF THE INVENTION

### 1. Technical Field

The present invention relates to a tire pressure monitoring system module.

### 2. Description of the Related Art

When tire pressure of a vehicle is lower than appropriate pressure, fuel efficiency is reduced and a problem occurs in terms of safety for a driver due to abrasion of a tire. Therefore, regulation of a tire pressure monitoring system informing the driver of pressure reduction of the tire has been conducted or has been noticed. Since 2007 in the United State, the tire pressure monitoring system has been regulated. In addition, the regulation of the tire pressure monitoring system has been noticed in Europe (October, 2012) and Korea (Jan, 2013).

Therefore, the demand of the market for the tire pressure monitoring system has increased, and the research for defect prevention and cost reduction has been conducted. A defect of the tire pressure monitoring system is mainly generated since a sensor module is coupled to a valve and is mounted on a wheel to thereby be applied with strong centrifugal force. Therefore, the interest in minimizing the weight has increased. A cost problem is related to an increased in a value mounting cost and a manufacturing cost. The vehicle in which the tire pressure monitoring system is not mounted uses a snap-in valve made of a generate rubber material and mounted by being pulled from an inside of the wheel toward an outside thereof. On the other hand, since the valve coupled to the tire pressure monitoring system is applied with stronger centrifugal force due to weight of the sensor module, a clamp-in valve made of a metal and coupled to the wheel by bolting is used.

Therefore, a mounting cost and a valve cost increase. In order to use the snap-in valve, a structure capable of minimizing volume of the sensor module is required. Therefore, research into a structure capable of preventing a defect by reducing weight of a tire pressure monitoring system sensor module and using a snap-in valve having a low mounting cost and manufacturing cost has been conducted.

The tire pressure monitoring system module according to the prior art has a structure in which a battery and a printed circuit board (PCB) are disposed on the same plane. Therefore, in order to match weight of a battery installing part to weight of a PCB installing part, volume of coating is unnecessarily increased to increase weight, such that a defect in rotation of the motor due to a weight difference between the battery installing part and the PCB installing part may be generated.

Due to an unnecessary increase in weight, it is difficult to use the snap-in valve having a low mounting cost and manufacturing cost. In order to manufacture a tire pressure monitoring system transmitter using the snap-in valve, structures in which a sensor module is mounted in a valve so as to be perpendicular to a bottom surface have been suggested as follows.

This scheme has advantages in that an unnecessary increase in coating volume is reduced and the tire pressure monitoring system transmitter has a symmetrical structure. However, the sensor module is inclined at an angle of 15 to 20 degrees with respect to a direction of centrifugal force, such that it is not coupled in a form of minimizing the centrifugal force.

In addition, these structures do not include a configuration of reducing volume occupied by an antenna since the valve is used as the antenna.

### SUMMARY OF THE INVENTION

The present invention has been made in an effort to provide a tire pressure monitoring system module capable of reducing a defect ratio, a mounting cost, and a manufacturing cost.

According to a preferred embodiment of the present invention, there is provided a tire pressure monitoring system module including: a circuit board having electronic components and electrical elements mounted thereon to transceive electrical signals; a battery mounted on a lower portion of the circuit board to thereby form a double layer structure together with the circuit board; a valve antenna provided at a side portion of the circuit board; and a connection pin connecting the circuit board and the valve antenna to each other.

The valve antenna may be mounted to be inclined at an angle of 15 degrees or 20 degrees based on a plane of the circuit board.

The connection pin may be made of a conductive member.

The connection pin may be connected to upper and side portions of the circuit board.

The circuit board and the battery may be mounted on a wheel of a vehicle so that mounting surfaces thereof are perpendicular to the center axis of the wheel.

The valve antenna may use a valve as an antenna.

The circuit board may include a battery soldering land formed in order to bond the battery.

### BRIEF DESCRIPTION OF THE DRAWINGS

FIG. 1 is a view showing the entire tire pressure monitoring system module according to a preferred embodiment of the present invention;
FIG. 2 is an enlarged view of a circuit board and a connection pin of the tire pressure monitoring system module according to the preferred embodiment of the present invention;
FIG. 3 is a rear view of FIG. 2; and
FIG. 4 is a view showing a shape in which the tire pressure monitoring system module according to the preferred embodiment of the present invention is mounted on a wheel.

### DESCRIPTION OF THE PREFERRED EMBODIMENTS

Various objects, advantages and features of the invention will become apparent from the following description of embodiments with reference to the accompanying drawings.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

The above and other objects, features and advantages of the present invention will be more clearly understood from the following detailed description taken in conjunction with the accompanying drawings. In the specification, in adding reference numerals to components throughout the drawings, it is to be noted that like reference numerals designate like components even though components are shown in different drawings. Further, when it is determined that the detailed description of the known art related to the present invention may obscure the gist of the present invention, the detailed description thereof will be omitted.

Hereinafter, preferred embodiments of the present invention will be described in detail with reference to the accompanying drawings.

The present invention relates to a tire pressure monitoring system module. The tire pressure monitoring system is a system that senses pressure and temperature using a sensor attached to a tire, transmits data including the sensed pressure and temperature to a driver's sheet in real time, and allows a driver to check a pressure state of the tire in real time.

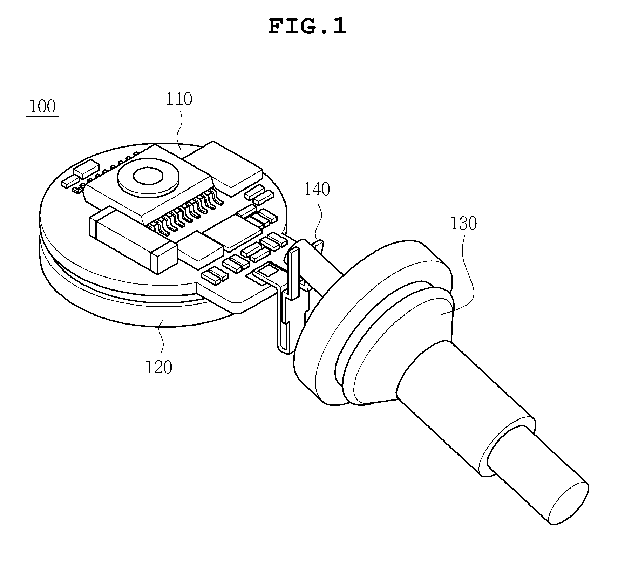

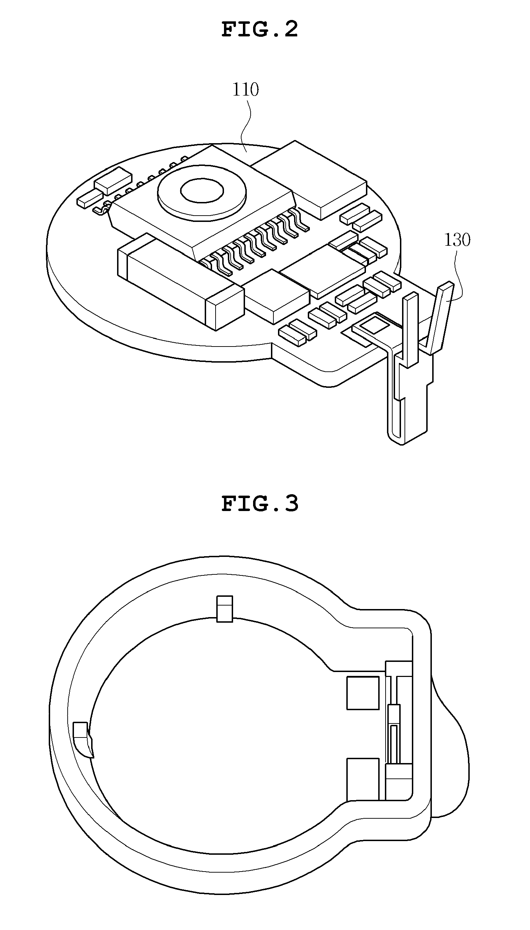

FIG. 1 is a view showing the entire tire pressure monitoring system module according to a preferred embodiment of the present invention; and FIG. 2 is an enlarged view of a circuit board and a connection pin of the tire pressure monitoring system module according to the preferred embodiment of the present invention.

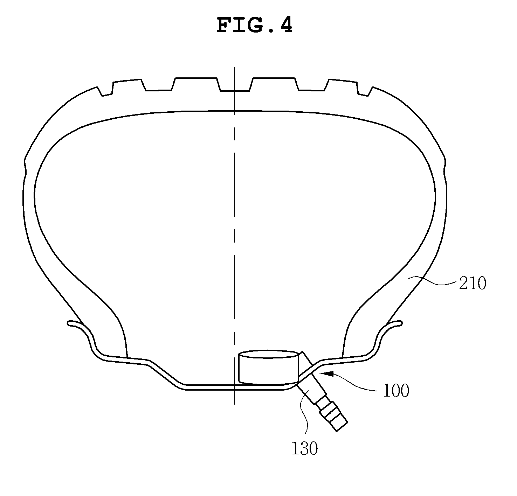

FIG. 3 is a rear view of FIG. 2; and FIG. 4 is a view showing a shape in which the tire pressure monitoring system module according to the preferred embodiment of the present invention is mounted on a wheel.

As shown in FIG. 1, the tire pressure monitoring system module 100 according to the preferred embodiment of the present invention is configured to include a circuit board 110, a battery 120, a valve antenna 130, and a connection pin 140.

The circuit board 110, which has various electrical signal elements and electronic circuits mounted thereon to transceive electrical signals and current, is mounted on an upper portion of the battery 120 to form a double layer structure and includes the valve antenna 130 mounted at a side portion thereof.

The circuit board 110 includes a land part implemented for bonding to the battery 120, and the battery 120 is mounted on a lower portion of the circuit board 110 and applies necessary energy thereto.

The battery 120 is mounted on the lower portion of the circuit board 110, such that the circuit board 110 has a structure in which it has components such as a sensor, a microcontroller (MCU), a passive element, or the like, mounted on one surface thereof and the battery 120 mounted on an opposite surface thereof.

The side portion of the circuit board 110 is provided with the connecting pin 140 connecting the valve antenna 130 to the circuit board 110. Here, the valve antenna 130 is mounted to be oblique based on a plane of the circuit board 110, preferably at an angle of about 15 to 20 degrees.

The connection pin 140 is to attach or detach the valve antenna 130 to or from the circuit board 110. The connection pin 140 is provided, such that the valve antenna 130 may be easily mounted to be oblique.

The connection pin 140 is made of a conductive material and has a structure in which it is coupled to the valve antenna 130 by tension.

The shape of the valve antenna 130 mounted to be oblique with respect to the plane of the circuit board 110 is more advantageous in view of maintenance of centrifugal force as compared to the shape according to the prior art in which the valve is mounted perpendicularly to the circuit board.

That is, since a structure of the tire pressure monitoring system module 100 in which the valve antenna 130 is mounted to be oblique to a wheel of a vehicle is a symmetrical structure, a defect in rotation of the sensor module generated during driving of the vehicle due to a difference in weight is minimized. In addition, a distance from the center of the wheel is minimized, thereby making it possible to minimize an influence due to centrifugal force.

Further, a lower space of connection between the valve antenna 130 in which components may not be generally mounted and a sensor module is used as a battery soldering land and a connection part of a conductive member for forming the valve antenna, thereby making it possible to minimize volume.

A shape of the tire pressure monitoring system module 100 mounted on the wheel will be described in more detail with reference to FIG. 4.

FIG. 2 is an enlarged view of a circuit board 110 and a connection pin 140 of the tire pressure monitoring system module 100 according to the preferred embodiment of the present invention.

The connection pin 140 is made of a conductive material and connects the circuit board 110 and the valve antenna (not shown) to each other by tension to thereby serve as a connection part for forming the valve antenna (not shown).

Upper and side portions of the circuit board 110 may be plated so as to be electrically conducted to the connection pin 140.

The circuit board 110 and the connection pin 140 may be coupled to each other through soldering or mechanical coupling.

FIG. 3, which is a rear view of FIG. 2, shows a battery soldering land formed in order to bond the battery to the circuit board 110.

FIG. 4 is a view showing a shape in which the tire pressure monitoring system module 100 according to the preferred embodiment of the present invention is mounted on a wheel 210.

As shown in FIG. 4, the tire pressure monitoring system module 100 is mounted on the wheel so as to be perpendicular to the center of the wheel 210 and have a bilateral symmetry shape. Therefore, a defect in rotation of the module generated during driving of the vehicle is minimized. In addition, a distance from the center of the wheel 210 is minimized, thereby making it possible to minimize an influence due to centrifugal force.

Further, a lower space of connection between the valve antenna 130 in which components may not be generally mounted and the sensor module is used as a connection part of the connection pin 140, thereby making it possible to minimize volume.

The tire pressure monitoring system module 100 according to the preferred embodiment of the present invention as described above has a double layer structure in which the circuit board 110 is mounted on the upper portion of the battery 120 and includes the connection pin 140 formed between the circuit board 110 and the valve antenna 130 so as to serve as the connection part of the valve antenna 140.

The connection pin 140 is made of the conductive member and is easily attached to and detached from the valve antenna 130. The connection pin 140 is coupled to the valve antenna 130 by tension.

Further, the tire pressure monitoring system module 100 is inclined at an angle of about 20 degrees with respect to a direction of centrifugal force to minimize an influence due to centrifugal force, such that a defect ratio of a product is significantly reduced, thereby making it possible to reduce a manufacturing cost and a time.

The valve is used as an antenna, such that volume occupied by the antenna is reduced, thereby making it possible to simplify a product.

Although the embodiment of the present invention has been disclosed for illustrative purposes, it will be appreciated that a tire pressure monitoring system module according to the invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A tire pressure monitoring system module comprising:
a circuit board having electronic components and electrical elements mounted thereon to transceive electrical signals;
a battery mounted on a lower portion of the circuit board to thereby form a double layer structure together with the circuit board;
a valve antenna provided at a side portion of the circuit board; and
a connection pin connecting the circuit board and the valve antenna to each other.

2. The tire pressure monitoring system module as set forth in claim 1, wherein the valve antenna is mounted to be inclined at an angle of 15 degrees or 20 degrees based on a plane of the circuit board.

3. The tire pressure monitoring system module as set forth in claim 1, wherein the connection pin is made of a conductive member.

4. The tire pressure monitoring system module as set forth in claim 1, wherein the connection pin is connected to upper and side portions of the circuit board.

5. The tire pressure monitoring system module as set forth in claim 1, wherein the circuit board and the battery are mounted on a wheel of a vehicle so that mounting surfaces thereof are perpendicular to the center axis of the wheel.

6. The tire pressure monitoring system module as set forth in claim 1, wherein the valve antenna uses a valve as an antenna.

7. The tire pressure monitoring system module as set forth in claim 1, wherein the circuit board includes a battery soldering land formed in order to bond the battery.
